# EUROPEAN PATENT SPECIFICATION

(11) **EP 3 279 822 B1**
(45) Date of publication and mention of the grant of the patent: **15.01.2020**
(21) Application number: 17184521.7
(22) Date of filing: 02.08.2017
(51) Int. Cl.: G06F 21/32, H04L 29/06

(54) **IDENTITY VERIFICATION METHOD AND DEVICE**
IDENTITÄTSVERIFIZIERUNGSVERFAHREN UND -VORRICHTUNG
DISPOSITIF ET PROCÉDÉ DE VÉRIFICATION D'IDENTITÉ

(30) Priority: 02.08.2016 CN 201610626167
(43) Date of publication of application: 07.02.2018
(73) Proprietor: Beijing Xiaomi Mobile Software Co., Ltd., Beijing 100085 (CN)
(72) Inventor: JIANG, Zhongsheng, Haidian District, Beijing 100085 (CN); LI, Guosheng, Haidian District, Beijing 100085 (CN); JI, Chuanshun, Haidian District, Beijing 100085 (CN)
(74) Representative: Robson, Aidan John

(56) References cited:
- EP-A2- 1 265 121
- EP-A2- 2 892 002
- US-A1- 2015 067 827
- US-A1- 2015 319 294

## Description

### TECHNICAL FIELD

The present disclosure generally relates to terminal technology field, and more particularly relates to an identity verification method and device.

### BACKGROUND

With the rapid development of terminal technology, more and more terminals support a fingerprint recognition function (such as an unlocking by the fingerprint recognition). Currently, most terminals realize the fingerprint recognition function using a physical button in combination with a fingerprint recognition sensor.

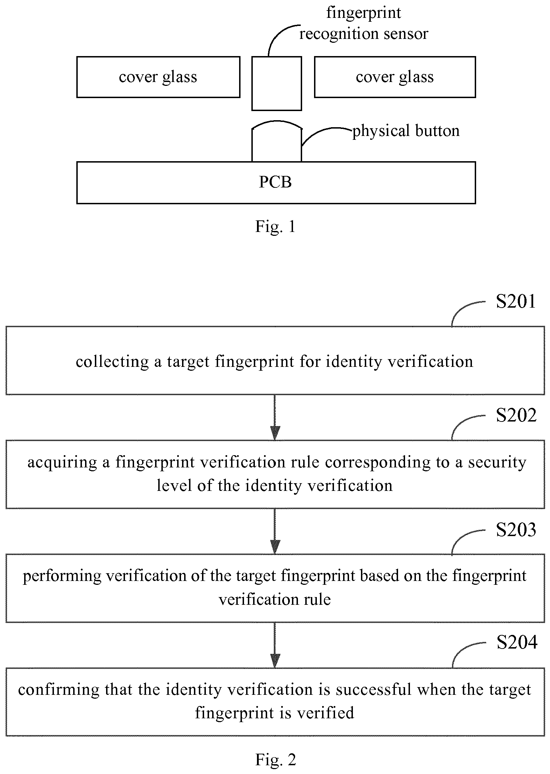

Referring to the cross-sectional view of the terminal shown in Fig. 1, in order to realize the fingerprint recognition function, a region for installing the fingerprint recognition sensor is generally arranged in a cover glass, and the physical button is located below the fingerprint recognition sensor. When the press force with which a user presses the fingerprint recognition sensor reaches a certain value, the physical button may be triggered simultaneously.

In such an implementation, the user only needs to slightly touch the fingerprint recognition sensor for entering a fingerprint. However, for unlocking, the user usually needs to press the fingerprint recognition sensor hard so as to trigger the physical button, and in this case, the fingerprint recognition sensor may be in a motion state, which may cause the force applied to the fingerprint recognition sensor uneven and make the collected fingerprint unclear, thus affecting the precision of the fingerprint recognition and affecting the user experience.

European patent application with publication No. EP2892002 discloses methods and apparatuses for executing a function of an electronic device using fingerprint verification. A security level of the function to be performed is acquired, if the function requires the fingerprint verification. A fingerprint input of a user is received. A count of a number of matching points that exist between the fingerprint input and a prestored fingerprint is determined. The count of the number of matching points is compared with a minimum number of matching points corresponding to the security level of the function.

US patent application with publication No. US2015/0067827 discloses a terminal with a fingerprint reader and method of operating the same. The terminal includes a fingerprint reader to scan and read a fingerprint of a user and a user verification module. The user verification module calculates a matching value between the fingerprint read by the fingerprint reader and a previously registered fingerprint of the user, and identifies the matching value and a security level of a requested application to determine whether to execute the requested application. The security level is variable; for example, the security level may vary according to a type of application or may be arbitrarily set by the user.

EP 1 265 121 discloses an authentication system to manage and operate a plurality of types of apparatuses and applications. Fingerprint data detected by a fingerprint sensor is compared with the registered fingerprint data at a requested collation level corresponding to a security level of the application.

US 2015/319294 relates to fingerprint activation of a panic mode of operation for a mobile device. The mobile terminal uses a fingerprint sensor to authenticate a user for allowing secure access to certain mobile device functions or contents. The mobile device may be unlocked using a designated finger that activates a panic mode of operation. The user may register particular fingerprints to be associated with different modes of operation and activate the different modes based on the particular fingerprints.

### SUMMARY

In order to overcome problems existing in the related art, the present disclosure provides an identity verification method according to claim 1 and identity verification device according to claim 7. Further details of the invention are defined in the dependent claims.

The technical solutions provided by embodiments of the present disclosure may include following beneficial effects.

According to the present disclosure, the terminal may perform the verification of the target fingerprint based on the fingerprint verification rule corresponding to the security level of the current identity verification, and confirm that the identity verification is successful after the target fingerprint is verified. In the present disclosure, by distinguishing security levels of identity verifications, the precision of the fingerprint recognition may be improved while ensuring the security, thus improving the user experience.

According to the present disclosure, the user may set different security levels for various identity verifications triggered by the system events, for example, set a security level lower than that of a payment identity verification for an unlocking identity verification, such that the passing rate of the fingerprint recognition of a low-risk identity verification is improved while ensuring the security of a high-risk identity verification, thus improving the user experience.

According to the present disclosure, the user may set fingerprint verification modes of different fingers for different identity verification scenes, which allows a high flexibility, and makes the user experience better.

It is to be understood that both the foregoing general description and the following detailed description are exemplary only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a cross-sectional view of a structure of a terminal configured with a fingerprint recognition sensor in the related art.
Fig. 2 is a flow chart of an example of an identity verification method.
Fig. 3 is a flow chart of another example of identity verification method.
Fig. 4 is a flow chart showing an example of verifying a target fingerprint.
Fig. 5 is a flow chart of an identity verification method according to an exemplary embodiment of the present disclosure.
Fig. 6 is a block diagram of an identity verification device.
Fig. 7 is a block diagram of another identity verification device.
Fig. 8 is a block diagram of another identity verification device.
Fig. 9 is a block diagram of an identity verification device according to an exemplary embodiment of the present disclosure.
Fig. 10 is a block diagram of another identity verification device.
Fig. 11 is a block diagram of another identity verification device.
Fig. 12 is a block diagram of another identity verification device.
Fig. 13 is a schematic diagram of a structure of an identity verification device.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

Fig. 2 is a flow chart of an example of an identity verification method.

Referring to Fig. 2, the identity verification method may be applied in a terminal, and the terminal may include smart devices such as a smartphone, a tablet PC, a personal digital assistant (PDA) and a PC. The identity verification method may include following steps.

In step S201, a target fingerprint for identity verification is collected.

The system may awake a fingerprint recognition sensor to collect a fingerprint for identity verification when a preset system event is detected. The system may also awake the fingerprint recognition sensor to collect a fingerprint for identity verification when an identity verification instruction sent by an upper-level application is received, which shall not be specifically limited in the present disclosure.

For ease of description, the fingerprint for identity verification that is collected by the fingerprint recognition sensor may be called as the target fingerprint.

In step S202, a fingerprint verification rule corresponding to a security level of the identity verification is acquired.

The security level may be set by a user himself or herself, and the user may set different security levels for identity verifications of different application scenes according to his or her own requirements, for example, the user may set an identity verification of an unlocking scene to have a lower security level, and set an identity verification of a payment scene to have a higher security level, and so on.

Each security level has a corresponding fingerprint verification rule, and the fingerprint verification rule usually includes a verifying threshold, in which the verifying threshold is usually set by a developer, and is configured to verify whether the target fingerprint matches a legal fingerprint. For example, the developer may set a higher verifying threshold for a higher security level, and set a relatively lower verifying threshold for a lower security level, which shall not be specifically limited in the present application.

In step S203, verification of the target fingerprint is performed based on the fingerprint verification rule.

In step S204, it is confirmed that the identity verification is successful when the target fingerprint is verified.

It can be seen from the above descriptions that, according to the present disclosure, the terminal may perform verification of the target fingerprint according to the fingerprint verification rule corresponding to the security level of the current identity verification, and confirm that the identity verification is successful after the target fingerprint is verified. In the present disclosure, by distinguishing security levels of identity verifications, the precision of the fingerprint recognition may be improved while ensuring the security, thus improving the user experience.

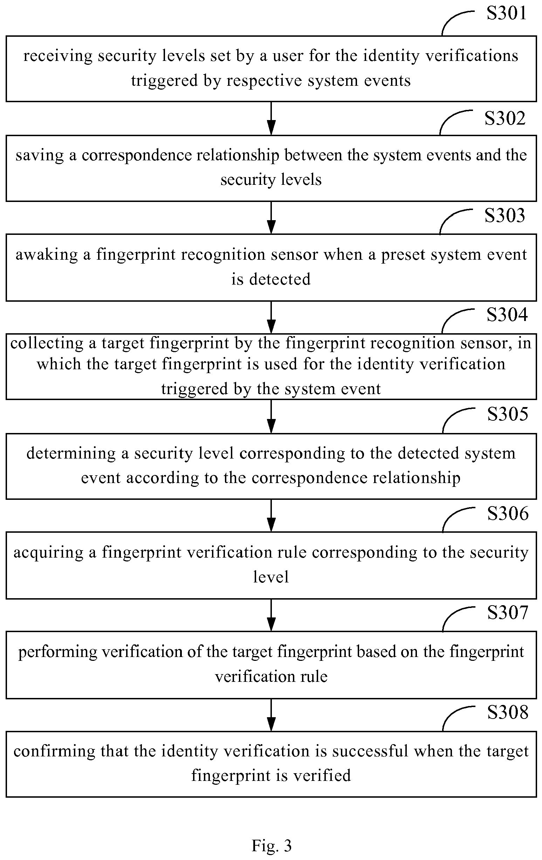

Fig. 3 is a flow chart of another identity verification method.

Referring to Fig. 3, the identity verification method may be applied in a terminal, and the method includes following steps.

In step S301, security levels set by the user for the identity verifications triggered by respective system events is received.

System events triggering identity verification, such as a click on a home button in a screen off state and a click on a power button in a screen off state, may be set by a developer of the system. In detail, different system events may trigger the identity verification having the same function, and may also trigger identity verifications having different functions. For example, a click on a home button in a screen off state and a click on a power button in a screen off state may trigger a system unlocking identity verification, while a double-click on the home button in a screen off state may trigger a system payment identity verification etc.

The user may set security levels for identity verifications triggered by respective system events in advance. In general, a developer may set several security levels in advance, for the user's choice. Suppose that the developer sets three security levels in advance, which include a high security level, a medium security level and a low security level, then the user may set different security levels for the system unlocking identity verification and the system payment identity verification triggered by the system events. Referring to the correspondence relationship shown in Table 1, the user may set a medium security level for the system unlocking identity verification, and set a high security level for the system payment identity verification.

**Table 1**

| Identity verification | Security level |
|---|---|
| System unlocking identity verification | Medium security level |
| System payment identity verification | High security level |

In step S302, a correspondence relationship between the system events and the security levels is saved.

A correspondence relationship between the security levels and system events triggering the identity verifications may be saved after the security levels set by the user is received.

**Table 2**

| System event | Security level |
|---|---|
| A click on a home button in a screen off state | Medium security level |
| A click on a power button in a screen off state | |
| A double-click on a home button in a screen off state | High security level |

Taking Table 1 as an example, correspondence relationship shown in Table 2 may be saved. It should be noted that, Table 2 is merely for an exemplary illustration, and such a table may also not be saved in practical applications, which shall not be specifically limited in the present disclosure.

In step S303, a fingerprint recognition sensor is awaked when a preset system event is detected.

In order to reduce the system cost and prevent erroneous judgments, the fingerprint recognition sensor configured in the terminal is in a sleep state in a scene in which the identity verification is not required. The terminal may awake the fingerprint recognition sensor when a system event for identity verification is detected, thus collecting a target fingerprint.

For example, the terminal may awake the fingerprint recognition sensor when a click event on the power button is detected in a screen off state, and the terminal may also awake the fingerprint recognition sensor when a double-click event on the home button is detected in a screen off state.

In step S304, a target fingerprint is collected by the fingerprint recognition sensor, in which the target fingerprint is used for the identity verification triggered by the system event.

After being awaked, the fingerprint recognition sensor may collect the target fingerprint inputted by the user, for example, may collect an image of the target fingerprint.

In step S305, a security level corresponding to the detected system event is determined according to the correspondence relationship.

After the system event is detected, the terminal may determine the security level corresponding to the system event according to the correspondence relationship saved in the above step S302.

For example, suppose that the detected system event is a click on a power button in a screen off state, then a security level corresponding to this system event (i.e., medium security level) may be acquired. Suppose that the detected system event is a double-click on a home button in a screen off state, then a security level corresponding to this system event (i.e., high security level) may be acquired.

In step S306, a fingerprint verification rule corresponding to the security level is acquired.

On the basis of the above step S305, after the security level is acquired, a fingerprint verification rule corresponding to the security level may be acquired. The fingerprint verification rule may also be set by a developer, and usually includes a verifying threshold, in which the verifying threshold is configured to verify whether the target fingerprint matches a legal fingerprint.

In step S307, verification of the target fingerprint is performed based on the fingerprint verification rule.

After the target fingerprint is collected by the fingerprint recognition sensor and after the fingerprint verification rule is acquired, the verification of the target fingerprint may be performed based on the acquired fingerprint verification rule. If the target fingerprint is verified, step S308 may be executed, and if the target fingerprint fails to be verified, it may be confirmed that the identity verification fails, and then a prompt message is outputted to the user.

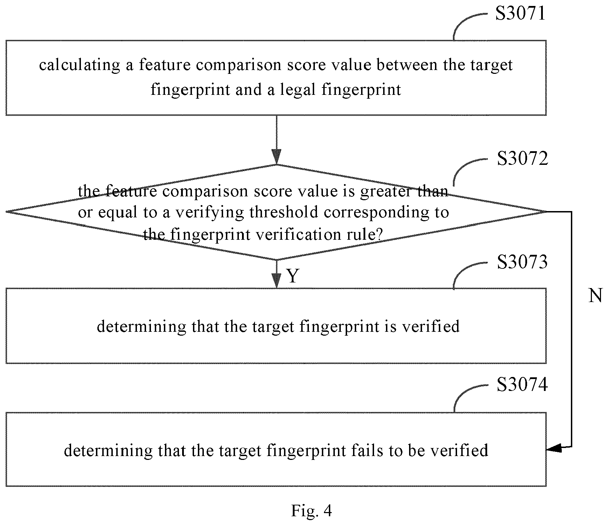

Referring to Fig. 4, verification of the target fingerprint may be performed by following steps.

In step S3071, a feature comparison score value between the target fingerprint and a legal fingerprint is calculated.

The legal fingerprint is inputted by a legal user of the terminal in advance, for example, the user may input the legal fingerprint when the fingerprint recognition function of the terminal is turned on. With respect to the processing and implementation of this part, reference may be made to the related art, which will not be elaborated in the present disclosure.

Feature comparison score values between the target fingerprint and respective legal fingerprints may be calculated in order. In an example, a similarity between the collected target fingerprint image and a legal fingerprint image may be calculated, for example, the similarity may be calculated using a perceptual hash algorithm, and the similarity may be taken as the feature comparison score value. In another example, a de-noising processing may be performed on the collected target fingerprint image first, and a fingerprint feature extraction may be performed on the de-noised target fingerprint image (for ease of description, the fingerprint feature of the target fingerprint image may be called as a target fingerprint feature), and then a comparison score between the target fingerprint feature and the legal fingerprint feature of a legal fingerprint may be calculated, for example, comparison scores between the target fingerprint feature and the legal fingerprint in respective dimensions such as a spiral dimension and a sulcus dimension may be calculated, and comparison score values in respective dimensions are summarized to obtain the feature comparison score value. With respect to the processing and implementation of this part, reference may be made to the related art, which will not be elaborated in the present disclosure.

In step S3072, it is judged whether the feature comparison score value is greater than or equal to a verifying threshold corresponding to the fingerprint verification rule. If the feature comparison score value is greater than or equal to the verifying threshold corresponding to the fingerprint verification rule, step S3073 may be executed. If the feature comparison score value is less than the verifying threshold corresponding to the fingerprint verification rule, step S3074 may be executed.

On the basis of the forgoing step S3071, after the feature comparison score value between the target fingerprint and the legal fingerprint is calculated, it may be judged whether the feature comparison score value is greater than or equal to the verifying threshold corresponding to the fingerprint verification rule.

In general, the verifying threshold in a fingerprint verification rule corresponding to a high security level is usually higher than the verifying threshold in a fingerprint verification rule corresponding to a low security level, that is, when a feature comparison score value is determined, the passing rate of the target fingerprint in a high-security-level identity verification scene is lower than the passing rate of that in a low-security-level identity verification scene, thus improving the passing rate of the fingerprint recognition in a low-security-level identity verification scene.

In step S3073, it is determined that the target fingerprint is verified.

On the basis of the judging result in the forgoing step S3072, if the feature comparison score value is greater than or equal to the verifying threshold corresponding to the fingerprint verification rule, it may be determined that the target fingerprint is verified.

In step S3074, it is determined that the target fingerprint fails to be verified.

On the basis of the judging result in the forgoing step S3072, if the feature comparison score value is less than the verifying threshold corresponding to the fingerprint verification rule, it may be determined that the target fingerprint fails to be verified.

For example, still taking the user setting shown in Table 1 as an example, when the user clicks the home button in a screen off state, in step S307, the terminal judges the feature comparison score value according to a relatively lower verifying threshold corresponding to the medium security level, which significantly improves the passing rate of the fingerprint recognition. When the user double-clicks the home button in a screen off state, in step S307, the terminal judges the feature comparison score value according to a relatively higher verifying threshold corresponding to the high security level, thus ensuring the security of the high-risk payment identity verification scene.

In step S308, it is confirmed that the identity verification is successful when the target fingerprint is verified.

When the target fingerprint is verified, it may be determined that the identity verification is successful, and then operations related to successful verification may be implemented, such as unlocking a system lock, and completing a payment operation.

It can be seen from the above descriptions that, the user may set different security levels for various identity verifications triggered by the system events, for example, set a security level lower than that of a payment identity verification for an unlocking identity verification, which improves the passing rate of the fingerprint recognition of the low-risk identity verification while ensuring the security of the high-risk identity verification, thus improving the user experience.

Alternatively, in another example of the present disclosure, the user is supported to set different fingerprints for identity verification for different identity verification scenes. Still taking Table 1 as an example, suppose that, on the basis of the correspondence relationship between the identity verification scenes and the security levels shown in Table 1, the user sets an accessing identity verification for an address book, for example, this accessing identity verification is performed when the address book button is clicked. The user sets the security level for this accessing identity verification to have a medium security level, meanwhile sets this accessing identity verification only being performed by verifying the right index finger. In this example, regarding the medium security level, the terminal may further establish another fingerprint verification rule corresponding to the medium security level based on the fingerprint verification rule corresponding to the medium security level, and sets a fingerprint identification for representing the right index finger in this fingerprint verification rule.

**Table 3**

| Identity verification | System event | Security level | Fingerprint verification rule |
|---|---|---|---|
| System unlocking identity verification | A click on a home button in a screen off state | Medium security level 1 | Fingerprint verification rule 1 |
| | A click on a power button in a screen off state | | |
| Accessing identity verification regarding the address book | A click on an address book button | Medium security level 2 | Fingerprint verification rule 2 |

Referring to Table 3, for a compatibility with identity verification scenes for fingerprints of different fingers, the terminal may save a correspondence relationship between the system event "a click on an address book button" and the medium security level 2, and establish a fingerprint verification rule 2 for the medium security level 2, in which the fingerprint verification rule 2 includes a fingerprint identification of a right index finger, and the verifying threshold in the fingerprint verification rule 2 is equal to the verifying threshold in the original fingerprint verification rule 1.

In this example, when the user clicks the address book button, the fingerprint recognition sensor may be awaked to collect the target fingerprint, and acquire the fingerprint verification rule 2 corresponding to the medium security level 2. When verification of the collected target fingerprint is performed based on the fingerprint verification rule 2, it may be first judged whether the fingerprint verification rule 2 includes a fingerprint identification. If a fingerprint identification is included, the legal fingerprint pointed by the fingerprint identification may be determined, and then the feature comparison score value between the target fingerprint and this legal fingerprint may be calculated without calculating feature comparison score values between the target fingerprint and other legal fingerprints. In this example, this fingerprint identification points to the right index finger, such that the feature comparison score value between the target fingerprint and a legal fingerprint of the right index finger may be calculated, and it is judged whether this feature comparison score value is greater than or equal to the verifying threshold of the fingerprint verification rule 2.

It can be seen from the above descriptions that, on the basis of the above technical solution, the user may set fingerprint verification modes of different fingers for different identity verification scenes, which allows a high flexibility, and makes the user experience better.

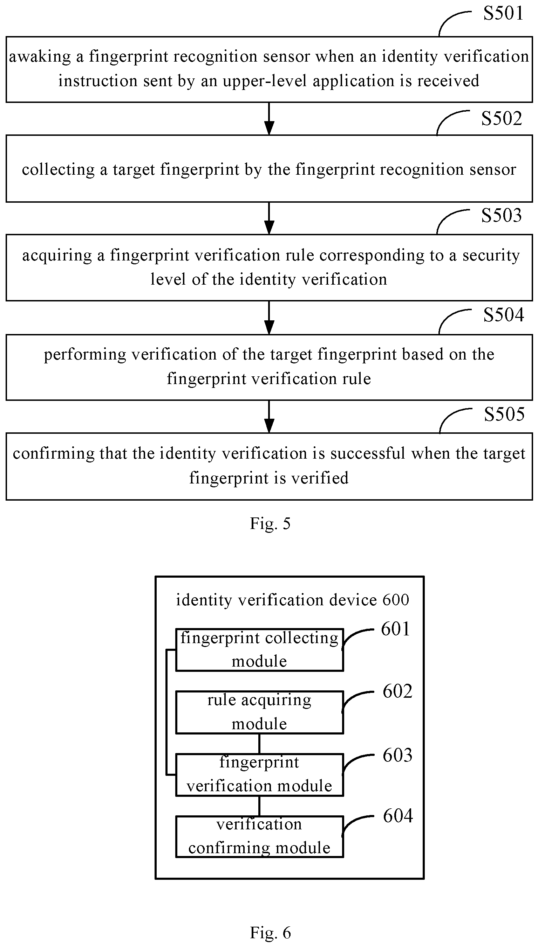

Fig. 5 is a flow chart of an identity verification method according to an exemplary embodiment of the present disclosure.

Referring to Fig. 5, the identity verification method may be applied in a terminal. The method includes following steps.

In step S501, a fingerprint recognition sensor is awaked when an identity verification instruction sent by an upper-level application is received.

In this embodiment, the upper-level application is usually an application (APP) installed in the terminal, such as an Alipay client, a WeChat client. Before invoking the fingerprint recognition sensor, the upper-level application may register in the system in advance so as to acquire a privilege to invoke components such as a fingerprint recognition sensor and a camera. With respect to the processing and implementation of this part, reference may be made to the related art, which will not be elaborated in the present disclosure.

In this embodiment, the user may set different security levels for respective upper-level applications having an identity verification function. For the same upper-level application, the user may also set different security levels for identity verifications in different application scenes.

For example, taking a payment software A as an example, the payment software A will perform an identity verification on the user at startup, and the payment software A will also perform an identity verification on the user when the user performs an payment operation and the like, and the user may set the security level of the unlocking identity verification scene of the payment software A as a medium security level, and set the security level of the payment identity verification scene of the payment software A as a high security level.

In this embodiment, when the user triggers an upper-level application oriented identity verification operation, the upper-level application may send an identity verification instruction to the terminal, and the identity verification instruction carries the security level of this identity verification. The terminal may awake the fingerprint recognition sensor to collect a target fingerprint when the identity verification instruction is received.

Still taking the payment software A as an example, when the user clicks the icon of payment software A, the payment software A sends an identity verification instruction having a medium security level to the terminal, and when the user performs a payment using the payment software A, the payment software A sends an identity verification instruction having a high security level to the terminal.

In step S502, a target fingerprint is collected by the fingerprint recognition sensor.

In step S503, a fingerprint verification rule corresponding to the security level of the identity verification is acquired.

On the basis of the forgoing step S501, after receiving the identity verification instruction sent by the upper-level application, the terminal may acquire a fingerprint verification rule corresponding to the security level carried in the identity verification instruction from the saved correspondence relationship between the security levels and the fingerprint verification rules.

In step S504, verification of the target fingerprint is performed based on the fingerprint verification rule.

In step S505, it is confirmed that the identity verification is successful when the target fingerprint is verified.

In this step, when it is determined that the target fingerprint is verified, a message indicating that the verification is successful may be returned to the upper-level application, and the upper-level application may further implement operations related to successful verification, such as displaying a home page message and completing a payment operation.

Alternatively, in another example, if the target fingerprint fails to be verified, a message indicating that the verification fails may also be returned to the upper-level application, and the upper-level application may further implement operations related to failing the verification, such as displaying a message indicating a failure of verification.

In the above embodiment shown in Fig. 5, the terminal may save the correspondence relationship between respective security levels and the fingerprint verification rules and perform verification of the target fingerprint by referring to the technical solution shown in Fig. 3, which will not be elaborated here in the present disclosure.

It can be seen from the above descriptions that, the user may set different security levels for different identity verifications of respective upper-level applications, such that the passing rate of the fingerprint recognition of the low-risk operation is improved while ensuring the security of the high-risk operation, thus improving the user experience.

Corresponding to the forgoing embodiments of the identity verification method, the present disclosure further discloses embodiments of an identity verification device.

Fig. 6 is a block diagram of an identity verification device.

Referring to Fig. 6, the identity verification device 600 may be applied in a terminal. The device includes: a fingerprint collecting module 601, a rule acquiring module 602, a fingerprint verification module 603 and a verification confirming module 604.

The fingerprint collecting module 601 is configured to collect a target fingerprint for identity verification.

The rule acquiring module 602 is configured to acquire a fingerprint verification rule corresponding to a security level of the identity verification.

The fingerprint verification module 603 is configured to perform verification of the target fingerprint collected by the fingerprint collecting module 601 based on the fingerprint verification rule acquired by the rule acquiring module 602.

The verification confirming module 604 is configured to confirm that the identity verification is successful when the target fingerprint is verified by the fingerprint verification module 603.

The terminal may perform verification of the target fingerprint based on the fingerprint verification rule corresponding to the security level of the current identity verification, and confirm that the identity verification is successful after the target fingerprint is verified. In the present disclosure, by distinguishing security levels of identity verifications, the precision of the fingerprint recognition may be improved while ensuring the security, thus improving the user experience.

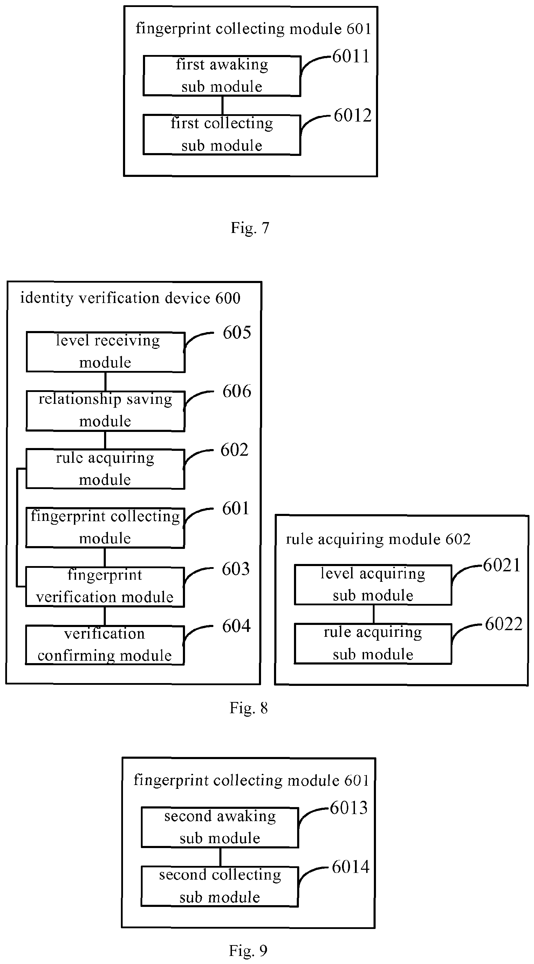

Fig. 7 is a block diagram of another identity verification device.

Referring to Fig. 7, on the basis of the device shown in Fig. 6, the fingerprint collecting module 601 may include: a first awaking sub module 6011 and a first collecting sub module 6012.

The first awaking sub module 6011 is configured to awake a fingerprint recognition sensor when a preset system event is detected.

The first collecting sub module 6012 is configured to collect the target fingerprint by the fingerprint recognition sensor awaked by the first awaking sub module 6011, in which the target fingerprint is used for the identity verification trigged by the system event.

Fig. 8 is a block diagram of another identity verification device.

Referring to Fig. 8, on the basis of the device shown in Fig. 7, the identity verification device 600 may further include: a level receiving module 605 and a relationship saving module 606. The rule acquiring module 602 may further include: a level acquiring sub module 6021 and a rule acquiring sub module 6022.

The level receiving module 605 is configured to receive security levels set by a user for the identity verifications triggered by respective system events.

The relationship saving module 606 is configured to save a correspondence relationship between the system events and the security levels received by the level receiving module 605.

The level acquiring sub module 6021 is configured to determine a security level corresponding to the detected system event according to the correspondence relationship saved by the relationship saving module 606.

The rule acquiring sub module 6022 is configured to acquire the fingerprint verification rule corresponding to the security level acquired by the level acquiring sub module 6021.

The user may set different security levels for various identity verifications triggered by the system events, for example, set a security level lower than that of a payment identity verification for an unlocking identity verification, such that the passing rate of the fingerprint recognition of the low-risk identity verification is improved while ensuring the security of the high-risk identity verification, thus improving the user experience.

Fig. 9 is a block diagram of an identity verification device according to an exemplary embodiment of the present disclosure.

Referring to Fig. 9, in this embodiment, on the basis of the embodiment shown in Fig. 6, the fingerprint collecting module 601 may include: a second awaking sub module 6013 and a second collecting sub module 6014.

The second awaking sub module 6013 is configured to awake a fingerprint recognition sensor when an identity verification instruction sent by an upper-level application is received, in which the identity verification instruction carries a security level of the identity verification.

The second collecting sub module 6014 is configured to acquire the target fingerprint by the fingerprint recognition sensor awaked by the second awaking sub module 6013.

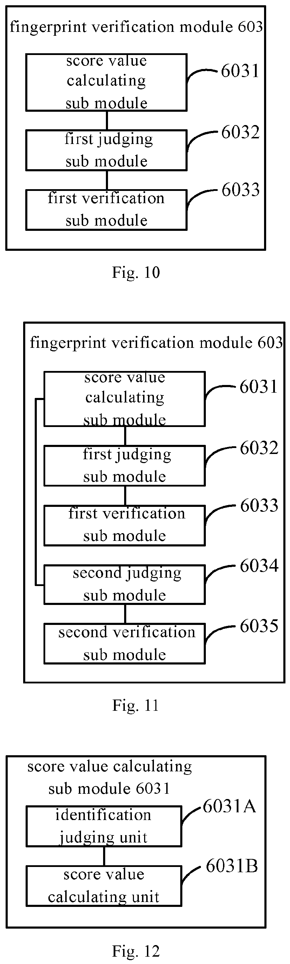

Fig. 10 is a block diagram of another identity verification device.

Referring to Fig. 10, on the basis of the device shown in Fig. 6, the fingerprint verification module 603 may include: a score value calculating sub module 6031, a first judging sub module 6032 and a first verification sub module 6033.

The score value calculating sub module 6031 is configured to calculate the feature comparison score value between the target fingerprint collected by the fingerprint collecting module 601 and a legal fingerprint.

The first judging sub module 6032 is configured to judge whether the feature comparison score value calculated by the score value calculating sub module 6031 is greater than a verifying threshold corresponding to the fingerprint verification rule.

The first verification sub module 6033 is configured to determine that the target fingerprint is verified when the first judging sub module 6032 confirms that the feature comparison score value is greater than the verifying threshold corresponding to the fingerprint verification rule.

It should be noted that, the score value calculating sub module 6031, the first judging sub module 6032 and the first verification sub module 6033 shown in the device shown in Fig. 10 may also be applied in the devices shown in Fig. 7 to Fig. 9, which shall not be specifically limited in the present disclosure.

Fig. 11 is a block diagram of another identity verification device.

Referring to Fig. 11, on the basis of the device shown in Fig. 10, the fingerprint verification module 603 may further include: a second judging sub module 6034 and a second verification sub module 6035.

The second judging sub module 6034 is configured to judge whether the feature comparison score value calculated by the score value calculating sub module 6031 is equal to the verifying threshold corresponding to the fingerprint verification rule.

The second verification sub module 6035 is configured to determine the target fingerprint is verified when the second judging sub module 6034 confirms that the feature comparison score value is equal to the verifying threshold corresponding to the fingerprint verification rule.

Fig. 12 is a block diagram of another identity verification device.

Referring to Fig. 12, on the basis of the device shown in Fig. 10, the score value calculating sub module 6031 may further include: an identification judging unit 6031A and a score value calculating unit 6031B.

The identification judging unit 6031A is configured to judge whether the fingerprint verification rule acquired by the rule acquiring module includes a fingerprint identification.

The score value calculating unit 6031B is configured to calculate the feature comparison score value between the target fingerprint collected by the fingerprint collecting module 601 and a legal fingerprint corresponding to the fingerprint identification when the identification judging unit 6031A determines that the fingerprint verification rule includes the fingerprint identification.

With respect to implementations of functions and actions of respective units in the above devices, reference may be made to implementations of corresponding steps in the above methods, which will not be elaborated herein.

Since device embodiments are basically corresponding to the method embodiments, for the related parts, reference may be made to partial descriptions of the method embodiments. The above device embodiments are merely exemplary. Units described as separate components may be or may not be physically separated. Components shown as units may be or may not be physical units, in other words, may be located at one position or may be distributed to a plurality of network units. Some or all of the modules may be selected according to actual requirements so as to achieve the objective of the present disclosure. Those skilled in the art may understand and implement the present disclosure without making creative efforts.

Correspondingly, the present disclosure further provides an identity verification device, including: a processor; a memory, configured to store instructions executable by the processor; wherein the processor is configured to: collect a target fingerprint for identity verification; acquire a fingerprint verification rule corresponding to a security level of the identity verification; perform verification of the target fingerprint based on the fingerprint verification rule; confirm that the identity verification is successful when the target fingerprint is verified.

Correspondingly, the present disclosure further provides a non-temporary computer-readable storage medium. When instructions in the storage medium are executed by the processor of the terminal, the terminal may implement an identity verification method. The method includes: collecting a target fingerprint for identity verification; acquiring a fingerprint verification rule corresponding to a security level of the identity verification; performing verification of the target fingerprint based on the fingerprint verification rule; confirming that the identity verification is successful when the target fingerprint is verified.

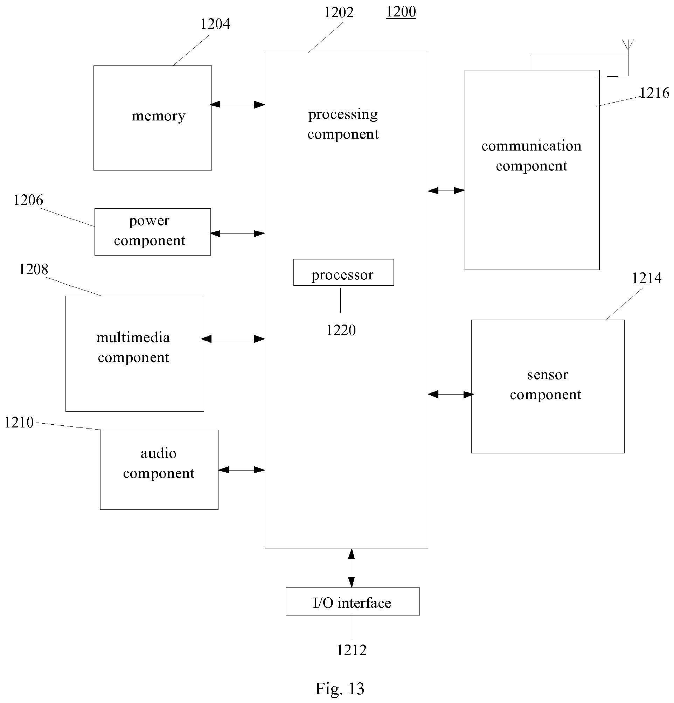

Fig. 13 is a block diagram of a structure of an identity verification device 1200. For example, the device 1200 may be a smartphone, a computer, a digital broadcasting terminal, a messaging apparatus, a game console, a tablet apparatus, a medical apparatus, a fitness apparatus, a Personal Digital Assistant etc.

Referring to Fig. 13, the device 1200 may include one or more of the following components: a processing component 1202, a memory 1204, a power component 1206, a multimedia component 1208, an audio component 1210, an input/ output (I/O) interface 1212, a sensor component 1214 and a communication component 1216.

The processing component 1202 typically controls overall operations of the device 1200, such as the operations associated with display, telephone calls, data communications, camera operations, and recording operations. The processing component 1202 may include one or more processors 1220 to execute instructions so as to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, videos, etc. The memory 1204 may be implemented using any type of volatile or non-volatile memory device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. The screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. The multimedia component 1208 may include a front camera and/or a rear camera. The front camera and/or the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input an audio signal. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. The audio component 1210 may further include a speaker to output audio signals.

The I/O interface 1212 provides an interface between the processing component 1202 and peripheral interface modules, such as a keyboard, a single click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an opened/closed status of the device 1200, relative positioning of components (e.g., the display and the keypad) of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. The sensor component 1214 may also include an accelerometer sensor, a gyroscope sensor, a magnetic sensor, a pressure sensor, or a temperature sensor.

The communication component 1216 is configured to facilitate wired or wireless communication between the device 1200 and other apparatus. The device 1200 can access a wireless network based on a communication standard, such as WiFi, 2G, or 3G, or a combination thereof. The communication component 1216 may receive a broadcast signal or broadcast associated information from an external broadcast management system via a broadcast channel. The communication component 1216 may further include a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

The device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

A non-transitory computer-readable storage medium may also be provided including instructions, such as the memory 1204 including instructions, and the instructions are executable by the processor 1220 of the device 1200, for performing the above-described methods. For example, the non-transitory computer-readable storage medium may be a ROM, a RAM (random access memory), a CD-ROM, a magnetic tape, a floppy disc, an optical data storage device, and the like.

## Claims

1. An identity verification method, comprising:
collecting a target fingerprint of a user for identity verification (S201) comprising awaking a fingerprint recognition sensor when an identity verification instruction sent by an upper-level application is received (S501) and collecting the target fingerprint by the fingerprint recognition sensor (S502), wherein the identity verification instruction carries the security level of the identity verification and the security level of the identity verification of the upper-level depends on an application scene of the upper-level application, wherein different security levels for different identity verifications in different application scenes exist for the same upper-level application;
acquiring a fingerprint verification rule corresponding to the security level of the identity verification (S202);
performing a verification of the target fingerprint based on the fingerprint verification rule (S203) by comparing the target fingerprint with a corresponding legal fingerprint among a plurality of different legal fingerprints of the user, and wherein the plurality of different legal fingerprints each corresponds to the respective security level of the identity verification; and
confirming that the identity verification is successful when the target fingerprint is verified (S204).

2. The method according to claim 1, wherein collecting a target fingerprint for identity verification (S201) comprises:
awaking a fingerprint recognition sensor when a preset system event is detected (S303);
collecting the target fingerprint by the fingerprint recognition sensor, in which the target fingerprint is used for the identity verification triggered by the system event (S304).

3. The method according to claim 1 or 2, further comprising:
receiving security levels set by a user for identity verifications triggered by respective system events (S301); and
saving a correspondence relationship between the system events and the security levels (S302),
wherein, acquiring a fingerprint verification rule corresponding to the security level of the identity verification (S202) comprises:
determining the security level corresponding to the detected system event according to the correspondence relationship (S305); and
acquiring the fingerprint verification rule corresponding to the security level (S306).

4. The method according to any one of claims 1-3, wherein performing a verification of the target fingerprint based on the fingerprint verification rule (S203) comprises:
calculating a feature comparison score value between the target fingerprint and the legal fingerprint (S3071);
judging whether the feature comparison score value is greater than a verifying threshold corresponding to the fingerprint verification rule (S3072);
determining that the target fingerprint is verified if the feature comparison score value is greater than the verifying threshold value corresponding to the fingerprint verification rule (S3073).

5. The method according to claim 4, wherein performing a verification of the target fingerprint based on the fingerprint verification rule (S203) further comprises:
judging whether the feature comparison score value is equal to the verifying threshold corresponding to the fingerprint verification rule (S3072);
determining that the target fingerprint is verified, if the feature comparison score value is equal to the verifying threshold value corresponding to the fingerprint verification rule (S3073).

6. The method according to claim 4 or 5, wherein calculating a feature comparison score value between the target fingerprint and a legal fingerprint (S3071) comprises:
judging whether the fingerprint verification rule comprises a fingerprint identification;
calculating the feature comparison score value between the target fingerprint and the legal fingerprint corresponding to the fingerprint identifier, if the fingerprint verification rule comprises the fingerprint identification.

7. An identity verification device (600), comprising:
a fingerprint collecting module (601), configured to collect a target fingerprint of a user for identity verification; wherein the fingerprint collecting module (601) comprises: a second awaking sub module (6013), configured to awake a fingerprint recognition sensor when an identity verification instruction sent by an upper-level application is received; a second collecting sub module (6014), configured to collect a target fingerprint by the fingerprint recognition sensor awaked by the second awaking sub module (6013); wherein the identity verification instruction carries the security level of the identity verification and the security level of the identity verification of the upper-level depends on an application scene of the upper-level application, wherein different security levels for different identity verifications in different application scenes exist for the same upper-level application;
a rule acquiring module (602), configured to acquire a fingerprint verification rule corresponding to a security level of the identity verification;
a fingerprint verification module (603), configured to perform a verification of the target fingerprint collected by the fingerprint collecting module (601) based on the fingerprint verification rule acquired by the rule acquiring module (602), by comparing the target fingerprint with a corresponding legal fingerprint among a plurality of different legal fingerprints of the user, and wherein the plurality of different legal fingerprints each corresponds to the respective security level of the identity verification; and
a verification confirming module (604), configured to confirm that the identity verification is successful when the target fingerprint is verified by the fingerprint verification module.

8. The device (600) according to claim 7, wherein the fingerprint collecting module (601) comprises:
a first awaking sub module (6011), configured to awake a fingerprint recognition sensor when a preset system event is detected;
a first collecting sub module (6012), configured to collect the target fingerprint by the fingerprint recognition sensor awaked by the first awaking sub module (6011), in which the target fingerprint is used for the identity verification trigged by the system event.

9. The device (600) according to claim 7 or 8, further comprising:
a level receiving module (605), configured to receive security levels set by a user for identity verifications triggered by respective system events;
a relationship saving module (606), configured to save a correspondence relationship between the system events and the security levels received by the level receiving module (605);
wherein the rule acquiring module (602) comprises:
a level acquiring sub module (6021), configured to determine the security level corresponding to the detected system event according to the correspondence relationship saved by the relationship saving module (606);
a rule acquiring sub module (6022), configured to acquire the fingerprint verification rule corresponding to the security level acquired by the level acquiring sub module (6021).

10. The device (600) according to any one of claims 7-9, wherein the fingerprint verification module (603) comprises:
a score value calculating sub module (6031), configured to calculate a feature comparison score value between the target fingerprint collected by the fingerprint collecting module (601) and the legal fingerprint;
a first judging sub module (6032), configured to judge whether the feature comparison score value calculated by the score value calculating sub module (6031) is greater than a verifying threshold corresponding to the fingerprint verification rule;
a first verification sub module (6033), configured to determine that the target fingerprint is verified when the first judging sub module (6032) confirms that the feature comparison score value is greater than the verifying threshold corresponding to the fingerprint verification rule.

11. The device (600) according to claim 10, wherein the fingerprint verification module (603) further comprises:
a second judging sub module (6034), configured to judge whether the feature comparison score value calculated by the score value calculating sub module (6031) is equal to the verifying threshold corresponding to the fingerprint verification rule;
a second verification sub module (6035), configured to determine that the target fingerprint is verified when the second judging sub module (6034) confirms that the feature comparison score value is equal to the verifying threshold corresponding to the fingerprint verification rule.

12. The device (600) according to claim 10, wherein the score value calculating sub module (6031) comprises:
an identification judging unit (6031A), configured to judge whether the fingerprint verification rule acquired by the rule acquiring module (602) comprises a fingerprint identification;
a score value calculating unit (6031B), configured to calculate the feature comparison score value between the target fingerprint collected by the fingerprint collecting module (601) and the legal fingerprint corresponding to the fingerprint identification when the identification judging unit (6031A) determines that the fingerprint verification rule comprises the fingerprint identification.

## Patentansprüche

1. Identitätsverifizierungsverfahren, das Folgendes aufweist:
Aufnehmen eines Zielfingerabdrucks eines Benutzers zur Identitätsverifizierung (S201), das das Aufwecken eines Fingerabdruckerkennungssensors, wenn eine von einer Anwendung einer höheren Ebene gesendete Identitätsverifizierungsanweisung empfangen wird (S501), und das Aufnehmen des Zielfingerabdrucks durch den Fingerabdruckerkennungssensor (S502) aufweist, wobei die Identitätsverifizierungsanweisung die Sicherheitsebene der Identitätsverifizierung trägt und die Sicherheitsebene der Identitätsverifizierung der höheren Ebene von einer Anwendungsszene der Anwendung der höheren Ebene abhängt, wobei verschiedene Sicherheitsebenen für verschiedene Identitätsverifizierungen in verschiedenen Anwendungsszenen für die gleiche Anwendung der höheren Ebene bestehen;
Erfassen einer Fingerabdruckverifizierungsregel, die der Sicherheitsebene der Identitätsverifizierung entspricht, (S202);
Durchführen einer Verifizierung des Zielfingerabdrucks auf Basis der Fingerabdruckverifizierungsregel (S203) durch Vergleichen des Zielfingerabdrucks mit einem entsprechenden zulässigen Fingerabdruck unter mehreren verschiedenen zulässigen Fingerabdrücken des Benutzers und wobei die mehreren verschiedenen zulässigen Fingerabdrücke jeweils der jeweiligen Sicherheitsebene der Identitätsverifizierung entsprechen; und
Bestätigen, dass die Identitätsverifizierung erfolgreich ist, wenn der Zielfingerabdruck verifiziert wird, (S204).

2. Verfahren nach Anspruch 1, wobei das Aufnehmen eines Zielfingerabdrucks zur Identitätsverifizierung (S201) Folgendes aufweist:
Aufwecken eines Fingerabdruckerkennungssensors, wenn ein voreingestelltes Systemereignis erkannt wird, (S303);
Aufnehmen des Zielfingerabdrucks durch den Fingerabdruckerkennungssensor, bei dem der Zielfingerabdruck zur durch das Systemereignis ausgelösten Identitätsverifizierung verwendet wird (S304).

3. Verfahren nach Anspruch 1 oder 2, das ferner Folgendes aufweist:
Empfangen von durch einen Benutzer eingestellten Sicherheitsebenen für durch jeweilige Systemereignisse ausgelöste Identitätsverifizierungen (S301); und
Speichern einer Entsprechungsbeziehung zwischen den Systemereignissen und den Sicherheitsebenen (S302),
wobei das Erfassen einer Fingerabdruckverifizierungsregel, die der Sicherheitsebene der Identitätsverifizierung entspricht, (S202) Folgendes aufweist:
Bestimmen der dem erkannten Systemereignis entsprechenden Sicherheitsebene gemäß der Entsprechungsbeziehung (S305); und
Erfassen der Fingerabdruckverifizierungsregel, die der Sicherheitsebene entspricht, (S306).

4. Verfahren nach einem der Ansprüche 1 bis 3, wobei das Durchführen einer Verifizierung des Zielfingerabdrucks auf Basis der Fingerabdruckverifizierungsregel (S203) Folgendes aufweist:
Berechnen eines Merkmalsvergleichsbewertungswerts zwischen dem Zielfingerabdruck und dem zulässigen Fingerabdruck (S3071);
Urteilen, ob der Merkmalsvergleichsbewertungswert größer als eine der Fingerabdruckverifizierungsregel entsprechende Verifizierungsschwelle ist, (S3072);
Bestimmen, dass der Zielfingerabdruck verifiziert wird, falls der Merkmalsvergleichsbewertungswert größer als der der Fingerabdruckverifizierungsregel entsprechende Verifizierungsschwellenwert ist, (S3073).

5. Verfahren nach Anspruch 4, wobei das Durchführen einer Verifizierung des Zielfingerabdrucks auf Basis der Fingerabdruckverifizierungsregel (S203) ferner Folgendes aufweist:
Urteilen, ob der Merkmalsvergleichsbewertungswert gleich der der Fingerabdruckverifizierungsregel entsprechenden Verifizierungsschwelle ist, (S3072);
Bestimmen, dass der Zielfingerabdruck verifiziert wird, falls der Merkmalsvergleichsbewertungswert gleich dem der Fingerabdruckverifizierungsregel entsprechenden Verifizierungsschwellenwert ist, (S3073).

6. Verfahren nach Anspruch 4 oder 5, wobei das Berechnen eines Merkmalsvergleichsbewertungswerts zwischen dem Zielfingerabdruck und einem zulässigen Fingerabdruck (S3071) Folgendes aufweist:
Urteilen, ob die Fingerabdruckverifizierungsregel eine Fingerabdruckidentifizierung aufweist;
Berechnen des Merkmalsvergleichsbewertungswerts zwischen dem Zielfingerabdruck und dem zulässigen Fingerabdruck, der der Fingerabdruckidentifizierung entspricht, falls die Fingerabdruckverifizierungsregel die Fingerabdruckidentifizierung aufweist.

7. Identitätsverifizierungsvorrichtung (600), die Folgendes aufweist:
ein Fingerabdruckaufnahmemodul (601), das zum Aufnehmen eines Zielfingerabdrucks eines Benutzers zur Identitätsverifizierung konfiguriert ist; wobei das Fingerabdruckaufnahmemodul (601) Folgendes aufweist: ein zweites Aufweckuntermodul (6013), das konfiguriert ist zum Aufwecken eines Fingerabdruckerkennungssensors, wenn eine von einer Anwendung einer höheren Ebene gesendete Identitätsverifizierungsanweisung empfangen wird; ein zweites Aufnahmeuntermodul (6014), das konfiguriert ist zum Aufnehmen eines Zielfingerabdrucks durch den durch das zweite Aufweckuntermodul (6013) aufgeweckten Fingerabdruckerkennungssensor; wobei die Identitätsverifizierungsanweisung die Sicherheitsebene der Identitätsverifizierung trägt und die Sicherheitsebene der Identitätsverifizierung der höheren Ebene von einer Anwendungsszene der Anwendung der höheren Ebene abhängt, wobei verschiedene Sicherheitsebenen für verschiedene Identitätsverifizierungen in verschiedenen Anwendungsszenen für die gleiche Anwendung der höheren Ebene bestehen;
ein Regelerfassungsmodul (602), das konfiguriert ist zum Erfassen einer Fingerabdruckverifizierungsregel, die einer Sicherheitsebene der Identitätsverifizierung entspricht;
ein Fingerabdruckverifizierungsmodul (603), das konfiguriert ist zum Durchführen einer Verifizierung des durch das Fingerabdruckaufnahmemodul (601) aufgenommenen Zielfingerabdrucks auf Basis der durch das Regelerfassungsmodul (602) erfassten Fingerabdruckverifizierungsregel durch Vergleichen des Zielfingerabdrucks mit einem entsprechenden zulässigen Fingerabdruck unter mehreren verschiedenen zulässigen Fingerabdrücken des Benutzers und wobei die mehreren verschiedenen zulässigen Fingerabdrücke jeweils der jeweiligen Sicherheitsebene der Identitätsverifizierung entsprechen; und
ein Verifizierungsbestätigungsmodul (604), das konfiguriert ist zum Bestätigen, dass die Identitätsverifizierung erfolgreich ist, wenn der Zielfingerabdruck durch das Fingerabdruckverifizierungsmodul verifiziert wird.

8. Vorrichtung (600) nach Anspruch 7, wobei das Fingerabdruckaufnahmemodul (601) Folgendes aufweist:
ein erstes Aufweckuntermodul (6011), das konfiguriert ist zum Aufwecken eines Fingerabdruckerkennungssensors, wenn ein voreingestelltes Systemereignis erkannt wird;
ein erste Aufnahmeuntermodul (6012), das konfiguriert ist zum Aufnehmen des Zielfingerabdrucks durch den durch das erste Aufweckmodul (6011) aufgeweckten Fingerabdruckerkennungssensor, bei dem der Zielfingerabdruck zur durch das Systemereignis ausgelösten Identitätsverifizierung verwendet wird.

9. Verfahren (600) nach Anspruch 7 oder 8, das ferner Folgendes aufweist:
ein Ebenenempfangsmodul (605), das konfiguriert ist zum Empfangen von durch einen Benutzer eingestellten Sicherheitsebenen für durch jeweilige Systemereignisse ausgelöste Identitätsverifizierungen;
ein Beziehungsspeichermodul (606), das konfiguriert ist zum Speichern einer Entsprechungsbeziehung zwischen den Systemereignissen und den Sicherheitsebenen, die durch das Ebenenempfangsmodul (605) empfangen werden;
wobei das Regelerfassungsmodul (602) Folgendes aufweist:
ein Ebenenerfassungsuntermodul (6021), das konfiguriert ist zum Bestimmen der dem erkannten Systemereignis entsprechenden Sicherheitsebene gemäß der durch das Beziehungsspeichermodul (606) gespeicherten Entsprechungsbeziehung;
ein Regelerfassungsuntermodul (6022), das konfiguriert ist zum Erfassen der Fingerabdruckverifizierungsregel, die der durch das Ebenenerfassungsuntermodul (6021) erfassten Sicherheitsebene entspricht.

10. Vorrichtung (600) nach einem der Ansprüche 7 bis 9, wobei das Fingerabdruckverifizierungsmodul (603) Folgendes aufweist:
ein Bewertungswertberechnungsuntermodul (6031), das konfiguriert ist zum Berechnen eines Merkmalsvergleichsbewertungswerts zwischen dem von dem Fingerabdruckaufnahmemodul (601) aufgenommenen Zielfingerabdruck und dem zulässigen Fingerabdruck;
ein erstes Beurteilungsuntermodul (6023), das konfiguriert ist zum Urteilen, ob der Merkmalsvergleichsbewertungswert größer als eine der Fingerabdruckverifizierungsregel entsprechende Verifizierungsschwelle ist;
ein erstes Verifizierungsuntermodul (6033), das konfiguriert ist zum Bestimmen, dass der Zielfingerabdruck verifiziert wird, wenn das erste Beurteilungsuntermodul (6032) bestätigt, dass der Merkmalsvergleichsbewertungswert größer als der der Fingerabdruckverifizierungsregel entsprechende Verifizierungsschwellenwert ist.

11. Vorrichtung (600) nach Anspruch 10, wobei das Fingerabdruckverifizierungsmodul (603) ferner Folgendes aufweist:
ein zweites Beurteilungsuntermodul (6034), das konfiguriert ist zum Urteilen, ob der durch das Bewertungswertberechnungsuntermodul (6031) berechnete Merkmalsvergleichsbewertungswert gleich der der Fingerabdruckverifizierungsregel entsprechenden Verifizierungsschwelle ist;
ein zweites Verifizierungsuntermodul (6035), das konfiguriert ist zum Bestimmen, dass der Zielfingerabdruck verifiziert wird, wenn das zweite Beurteilungsuntermodul (6034) bestätigt, dass der Merkmalsvergleichsbewertungswert gleich der der Fingerabdruckverifizierungsregel entsprechenden Verifizierungsschwelle ist.

12. Vorrichtung (600) nach Anspruch 10, wobei das Bewertungswertberechnungsuntermodul (6031) Folgendes aufweist:
eine Identifizierungsbeurteilungseinheit (6031A), die konfiguriert ist zum Urteilen, ob die durch das Regelerfassungsmodul (602) erfasste Fingerabdruckverifizierungsregel eine Fingerabdruckidentifizierung aufweist;
eine Bewertungswertberechnungseinheit (6031B), die konfiguriert ist zum Berechnen des Merkmalsvergleichsbewertungswerts zwischen dem durch das Fingerabdruckaufnahmemodul (601) aufgenommenen Zielfingerabdruck und dem zulässigen Fingerabdruck, der der Fingerabdruckidentifizierung entspricht, wenn die Identifizierungsbeurteilungseinheit (6031A) bestimmt, dass die Fingerabdruckverifizierungsregel die Fingerabdruckidentifizierung aufweist.

## Revendications

1. Procédé de vérification d'identité, comprenant :
la collecte d'une empreinte cible d'un utilisateur à des fins de vérification d'identité (S201) comprenant le réveil d'un capteur de reconnaissance d'empreinte quand une instruction de vérification d'identité envoyée par une application de niveau supérieur est reçue (S501) et la collecte de l'empreinte cible par le capteur de reconnaissance d'empreinte (S502), dans lequel l'instruction de vérification d'identité inclut le niveau de sécurité de la vérification d'identité et le niveau de sécurité de la vérification d'identité du niveau supérieur dépend d'une scène d'application de l'application de niveau supérieur, dans lequel différents niveaux de sécurité pour différentes vérifications d'identité dans différentes scènes d'application existent pour la même application de niveau supérieur ;
l'acquisition d'une règle de vérification d'empreinte correspondant au niveau de sécurité de la vérification d'identité (S202) ;
la réalisation d'une vérification de l'empreinte cible en fonction de la règle de vérification d'empreinte (S203) en comparant l'empreinte cible à une empreinte légale correspondante parmi une pluralité de différentes empreintes légales de l'utilisateur, et dans lequel chacune de la pluralité de différentes empreintes légales correspond au niveau de sécurité respectif de la vérification d'identité ; et
la confirmation que la vérification d'identité a réussi quand l'empreinte cible est vérifiée (S204).

2. Procédé selon la revendication 1, dans lequel la collecte d'une empreinte cible à des fins de vérification d'identité (S201) comprend :
le réveil d'un capteur de reconnaissance d'empreinte quand un événement de système prédéfini est détecté (S303) ;
la collecte de l'empreinte cible par le capteur de reconnaissance d'empreinte, dans lequel l'empreinte cible est utilisée pour la vérification d'identité déclenchée par l'événement de système (S304).

3. Procédé selon la revendication 1 ou 2, comprenant en outre :
la réception de niveaux de sécurité définis par un utilisateur pour des vérifications d'identité déclenchées par des événements de système respectifs (S301) ; et
la sauvegarde d'une relation de correspondance entre les événements de système et les niveaux de sécurité (S302),
dans lequel, l'acquisition d'une règle de vérification d'empreinte correspondant au niveau de sécurité de la vérification d'identité (S202) comprend :
la détermination du niveau de sécurité correspondant à l'événement de système détecté conformément à la relation de correspondance (S305) ; et
l'acquisition de la règle de vérification d'empreinte correspondant au niveau de sécurité (S306).

4. Procédé selon l'une quelconque des revendications 1 à 3, dans lequel la réalisation d'une vérification de l'empreinte cible en fonction de la règle de vérification d'empreinte (S203) comprend :
le calcul d'une valeur de score de comparaison de caractéristiques entre l'empreinte cible et l'empreinte légale (S3071) ;
le jugement que la valeur de score de comparaison de caractéristiques est supérieure ou non à un seuil de vérification correspondant à la règle de vérification d'empreinte (S3072) ;
la détermination que l'empreinte cible est vérifiée si la valeur de score de comparaison de caractéristiques est supérieure à la valeur de seuil de vérification correspondant à la règle de vérification d'empreinte (S3073).

5. Procédé selon la revendication 4, dans lequel la réalisation d'une vérification de l'empreinte cible en fonction de la règle de vérification d'empreinte (S203) comprend en outre :
le jugement que la valeur de score de comparaison de caractéristiques est égale ou non au seuil de vérification correspondant à la règle de vérification d'empreinte (S3072) ;
la détermination que l'empreinte cible est vérifiée si la valeur de score de comparaison de caractéristiques est égale à la valeur de seuil de vérification correspondant à la règle de vérification d'empreinte (S3073).

6. Procédé selon la revendication 4 ou 5, dans lequel le calcul d'une valeur de score de comparaison de caractéristiques entre l'empreinte cible et une empreinte légale (S3071) comprend
le jugement que la règle de vérification d'empreinte comprend ou non une identification d'empreinte ;
le calcul de la valeur de score de comparaison de caractéristiques entre l'empreinte cible et l'empreinte légale correspondant à l'identifiant d'empreinte, si la règle de vérification d'empreinte comprend l'identification d'empreinte.

7. Dispositif de vérification d'identité (600), comprenant :
un module de collecte d'empreinte (601), configuré pour collecter une empreinte cible d'un utilisateur à des fins de vérification d'identité ; dans lequel le module de collecte d'empreinte (601) comprend : un second sous-module de réveil (6013), configuré pour réveiller un capteur de reconnaissance d'empreinte quand une instruction de vérification d'identité envoyée par une application de niveau supérieur est reçue ; un second sous-module de collecte (6014), configuré pour collecter une empreinte cible par le capteur de reconnaissance d'empreinte réveillé par le second sous-module de réveil (6013) ; dans lequel l'instruction de vérification d'identité comporte le niveau de sécurité de la vérification d'identité et le niveau de sécurité de la vérification d'identité du niveau supérieur dépend d'une scène d'application de l'application de niveau supérieur, dans lequel différents niveaux de sécurité pour différentes vérifications d'identité dans différentes scènes d'application existent pour la même application de niveau supérieur ;
un module d'acquisition de règle (602), configuré pour acquérir une règle de vérification d'empreinte correspondant à un niveau de sécurité de la vérification d'identité ;
un module de vérification d'empreinte (603), configuré pour réaliser une vérification de l'empreinte cible collectée par le module de collecte d'empreinte (601) en fonction de la règle de vérification d'empreinte acquise par le module d'acquisition de règle (602), en comparant l'empreinte cible à une empreinte légale correspondante parmi une pluralité de différentes empreintes légales de l'utilisateur, et dans lequel chacune de la pluralité de différentes empreintes légales correspond au niveau de sécurité respectif de la vérification d'identité ; et
un module de confirmation de vérification (604), configuré pour confirmer que la vérification d'identité a réussi quand l'empreinte cible est vérifiée par le module de vérification d'empreinte.

8. Dispositif (600) selon la revendication 7, dans lequel le module de collecte d'empreinte (601) comprend :
un premier sous-module de réveil (6011), configuré pour réveiller un capteur de reconnaissance d'empreinte quand un événement de système prédéfini est détecté ;
un premier sous-module de collecte (6012), configuré pour collecter l'empreinte cible par le capteur de reconnaissance d'empreinte réveillé par le premier sous-module de réveil (6011), dans lequel l'empreinte cible est utilisée pour une vérification d'identité déclenchée par l'événement de système.

9. Dispositif (600) selon la revendication 7 ou 8, comprenant en outre :
un module de réception de niveaux (605), configuré pour recevoir des niveaux de sécurité définis par un utilisateur pour des vérifications d'identité déclenchées par des événements de système respectifs ;
un module de sauvegarde de relation (606), configuré pour sauvegarder une relation de correspondance entre les événements de système et les niveaux de sécurité reçus par le module de réception de niveaux (605) ;
dans lequel le module d'acquisition de règle (602) comprend :
un sous-module d'acquisition de niveau (6021), configuré pour déterminer le niveau de sécurité correspondant à l'événement de système détecté conformément à la relation de correspondance sauvegardée par le module de sauvegarde de relation (606) ;
un sous-module d'acquisition de règle (6022), configuré pour acquérir la règle de vérification d'empreinte correspondant au niveau de sécurité acquis par le sous-module d'acquisition de niveau (6021).

10. Dispositif (600) selon l'une quelconque des revendications 7 à 9, dans lequel le module de vérification d'empreinte (603) comprend :
un sous-module de calcul de valeur de score (6031), configuré pour calculer une valeur de score de comparaison de caractéristiques entre l'empreinte cible collectée par le module de collecte d'empreinte (601) et l'empreinte légale ;
un premier sous-module de jugement (6032), configuré pour juger que la valeur de score de comparaison de caractéristiques calculée par le sous-module de calcul de valeur de score (6031) est supérieure ou non à un seuil de vérification correspondant à la règle de vérification d'empreinte;
un premier sous-module de vérification (6033), configuré pour déterminer que l'empreinte cible est vérifiée quand le premier sous-module de jugement (6032) confirme que la valeur de score de comparaison de caractéristiques est supérieure au seuil de vérification correspondant à la règle de vérification d'empreinte.

11. Dispositif (600) selon la revendication 10, dans lequel le module de vérification d'empreinte (603) comprend en outre :
un second sous-module de jugement (6034), configuré pour juger que la valeur de score de comparaison de caractéristiques calculée par le sous-module de calcul de valeur de score (6031) est égale ou non au seuil de vérification correspondant à la règle de vérification d'empreinte ;
un second sous-module de vérification (6035), configuré pour déterminer que l'empreinte cible est vérifiée quand le second sous-module de jugement (6034) confirme que la valeur de score de comparaison de caractéristiques est égale au seuil de vérification correspondant à la règle de vérification d'empreinte.

12. Dispositif (600) selon la revendication 10, dans lequel le sous-module de calcul de valeur de score (6031) comprend :
une unité de jugement d'identification (6031A), configurée pour juger que la règle de vérification d'empreinte acquise par le module d'acquisition de règle (602) comprend ou non une identification d'empreinte ;
une unité de calcul de valeur de score (6031B), configurée pour calculer la valeur de score de comparaison de caractéristiques entre l'empreinte cible collectée par le module de collecte d'empreinte (601) et l'empreinte légale correspondant à l'identification d'empreinte quand l'unité de jugement d'identification (6031A) détermine que la règle de vérification d'empreinte comprend l'identification d'empreinte.
